# EUROPEAN PATENT SPECIFICATION

(11) **EP 0 981 939 B1**
(45) Date of publication and mention of the grant of the patent: **02.07.2003**
(21) Application number: 98116094.8
(22) Date of filing: 26.08.1998
(51) Int. Cl.: A01C 17/00

(54) **Method of spreading flowable material**
Verfahren um körnige Stoffe zu streuen
Méthode d'épandage de matériau fluide

(43) Date of publication of application: 01.03.2000
(73) Proprietor: A.P. Laursen A/S, DK-7171 Uldum (DK)
(72) Inventor: Laursen, Nils Jorn, 8722 Hedensted (DK)
(74) Representative: Roerboel, Leif

(56) References cited:
- EP-A- 0 330 839
- EP-A- 0 445 842
- EP-A- 0 835 602
- EP-A- 0 880 877
- DE-A- 3 917 210
- DE-A- 19 652 907

## Description

### TECHNICAL FIELD

The present invention relates to a method of spreading flowable material over a surface such as set forth in the preamble of claim 1.

### BACKGROUND ART

A method of this kind is disclosed in EP 0835602. In this disclosure is described how the spreading pattern can be changed, e.g. with a view to be able to pass along a field boundary or a watercourse without spreading e.g. fertilizer beyond certain limits, by using a spreading apparatus with two discs and making these discs rotate in the same or opposite sense in different directions, and possibly blocking the supply of spreadable material to one of the discs. Said method has the drawback that the running track has to be substantially adjacent to the field boundary. In practice, however, the field is often divided in strips by fixed running tracks in such a way that the boundary spreading has to be done from the last running track, which is at a certain distance from the boundary. The distance between the boundary and the last - or first - running track is in practice determined by the working width of the machinery used on a specific farm and which in turn is selected from a few standard working widths. Thus, once a certain distance between the running tracks is chosen, all equipment must use that distance or a multiple thereof, including the spreading apparatus. Consequently, the location of the running tracks is predetermined, and the location of the running track for edge spreading is fixed. In the case that the last running track is not adjacent to the boundary, the method referred to above does not provide a possibility to spread evenly said flowable material over the strip between said running track and said boundary, without the need for changing the spreader vanes or other part of the spreader device. Changing the spreader vanes is a time-consuming operation and is thus undesirable.

According to EP 0 880 877 A1 (document falling under Art. 54(3) EPC) or to EP-0 835 602 A1 a method for spreading material over a surface by means of a spreading apparatus is known, said device comprising at least two spreader discs each provided with one or more spreader vanes, where the spreader discs during operation can rotate either in opposite directions towards one another or away from one another on the non-shielded side of the spreader apparatus. During normal spreading operation, i.e. when spreading is performed at distances from the boundary of the surface large enough so that the casting distance of the spreader has not to be limited, the discs are rotated in opposite directions towards one another, whereas during spreading operations adjacent a boundary, where spreading is not allowed to take place across the boundary, the discs are rotated in opposite directions away from one another. The changed relative rotational directions of the discs results in changed spreading patterns due to specific construction of the spreader vanes.

Another problem that arises with spreading from a distance from the boundary is the distribution profile of the material over the strip between the last running track and the boundary. The normal scatter profile is substantially inversely proportional to the distance from the spreading apparatus. This profile is supplemented by a pattern from the next track resulting in a uniform distribution of the material to be spread. There is however no next track for the edge spreading when spreading from a distance from the boundary. Therefore, the spreading pattern for the edge spreading must be such that it gives a substantially uniform distribution of material to be spread over the edge strip in one run.

### DISCLOSURE OF THE INVENTION

On this background, it is the object of the present invention to provide a method of the kind referred to initially, with which it is possible to spread along the boundary of a field from a running track that is at a certain distance from the field boundary. This object is achieved in accordance with claim 1 by simply changing the rotation of at least one pair of spreader discs from rotating towards one another, i.e. wide spreading, to rotating away from one another, i.e. narrow spreading, when spreading along a boundary of the field. Moreover, the spreader vane or vanes of one of the spreader discs is/are designed in such a way that a reduced casting distance for the direction where the discs rotate away from one another is obtained and/or the rotational speed of the one of the discs is reduced in order to reduce the casting distance. Flowable material is supplied to both of the spreader discs, whereby the spreader disc that gives a reduced casting distance is used for spreading the strip between the boundary and the running track placed at a distance from the boundary.

In this way it is possible to use the spreading apparatus for wide spreading when spreading in the middle of the field and for spreading to a boundary and still obtain an even and constant distribution of the flowable material over the total extent of the field from boundary to boundary.

If the supply of flowable material to the spreader disc provided with spreader vanes giving a reduced casting distance is blocked, it is possible to use the spreading apparatus for spreading to the boundary even when the running track is adjacent to the boundary. This is due to the fact that the other spreader disc in the pair of spreader discs is driving in the narrow spreading mode because of the reversed direction of rotation, thereby distributing the material only to one side of the running track and by appropriate forming of the rear surface of the spreader vane obtaining the desired distribution. Together with the previously spread material from the wide spreading mode it forms a substantially uniform density over the area.

### BRIEF DESCRIPTION OF THE DRAWINGS

In the following detailed part of the present description, the invention will be explained in more detail with reference to the exemplary embodiments shown in the drawings, in which
Fig. 1 diagrammatically shows the running track plan for edge spreading from the field boundary together with the resulting distribution profile,
Fig. 2 shows the running track plan for edge spreading from a running track at a certain distance from the field boundary together with the resulting distribution profile, and
Fig. 3 shows an embodiment of a spreader vane giving a reduced casting distance when used for narrow spreading.

### DESCRIPTION OF THE PREFERRED EMBODIMENT

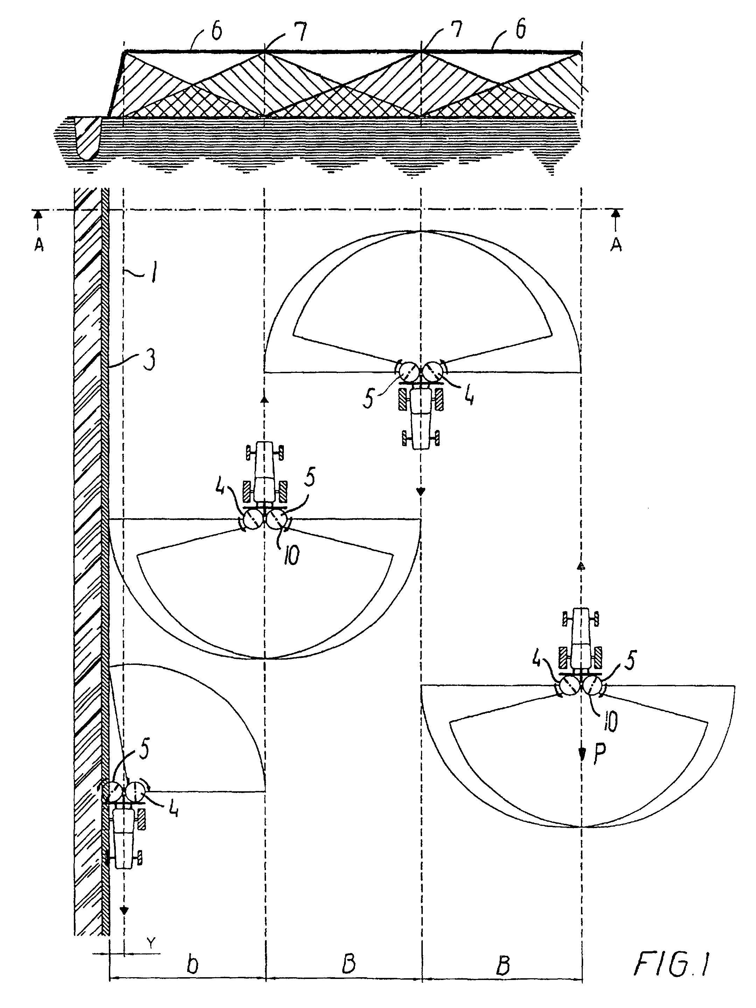

Fig. 1 shows the running track plan for edge spreading from a track 1 adjacent the field boundary 3. The spreading apparatus is provided with a shielding means (not shown) to prevent spreading of said flowable material to e.g. the tractor on which the spreading apparatus is mounted. This limitation in the direction in which the flowable material can leave the spreader disc causes the scatter pattern of each spreader disc to be in the shape of a sector. During the normal spreading, i.e. not along a field boundary 3, the spreader discs 4,5 of the spreader device rotate towards one another on the non-shielded side of the spreading apparatus giving a casting distance B. This mode of operation is known as wide spreading. Since the spreader discs 4,5 rotate towards one another on the non-shielded side of the spreading apparatus, the spreading sectors of each disc 4,5 overlap one another to a great extent with a tendency to concentration in the area near the running track. After one drive along the track a mainly triangular distribution profile with the peak 7 in the track is obtained, as can be seen from the graph at the top of Figure 1. After the drive along the neighbouring track, the two triangular profiles are added resulting in a mainly constant and even density over the spreading width, cf. the hatching in section A-A. The casting distance B corresponds substantially to the predetermined distance between the running tracks.

When spreading from the running track 1 along the field boundary 3, the direction of rotation of the spreader discs 4,5 is reversed so that the spreader discs 4,5 rotate in a direction away from each other on the non-shielded side of the spreading apparatus. The spreading sector of each disc 4,5 is thus reduced in such a way that their sectors are only slightly overlapping at the running track. This mode of operation is known as narrow spreading. If the supply of flowable material to the spreader disc 5 on the side of the field boundary is closed, the area along the field boundary can be spread, without casting material over the boundary. By an appropriate design of the rear surface of the spreader vanes of the discs to which the material is delivered the desired scatter profile of material can be obtained. The desired scatter profile is more precisely defined as being the quantities which together with one half of the previously distributed material from the passage of the neighbouring track with the spreader in the wide spreading mode result in a constant and even distribution to the boundary as shown in section A-A.

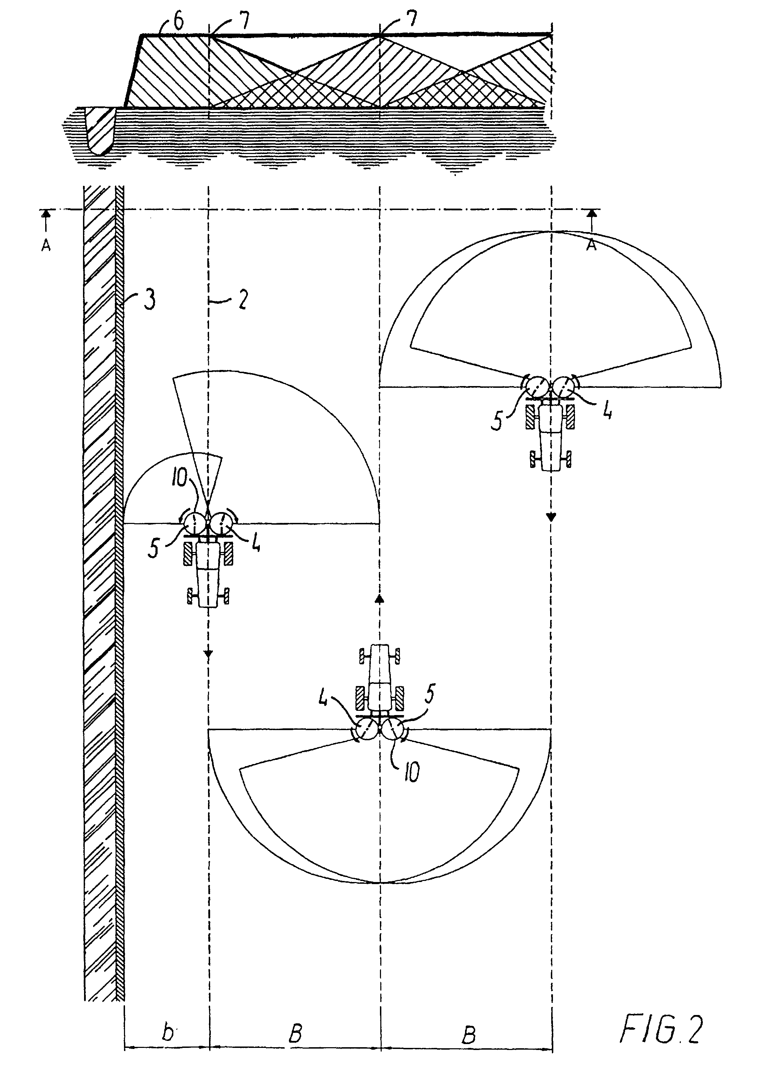

Fig. 2 shows the running track plan for edge spreading from running track 2 at a certain distance of the field boundary 3. For non-boundary spreading the discs 4,5 rotate again towards one another on the non-shielded side of the spreading apparatus, and the spreading sectors of the discs 4,5 overlap. The spreader is operating in the wide spreading mode. For edge spreading from the track 2 at a distance from the field boundary 3, the direction of the spreader discs is reversed so that they spread away from one another on the non-shielded side of the spreading apparatus. This gives a small overlap over the running track 2 of the spreading sectors of the individual spreader discs 4,5. Due to the design of the rear surface of the vanes the spreader disc 4 situated furthest away from the field boundary will produce a normal casting distance so as to match the normal driving track plan as described above. The spreader disc 5 situated nearest to the field boundary 3 delivers a reduced casting distance b substantially corresponding to the distance between the driving track and the field boundary. This reduction in casting distance is achieved by using at least one spreader vane 10 that gives a shorter casting distance b and/or by reducing the rotational speed of the spreader disc 5. In the normal spreading direction of rotation this spreader vane will deliver the normal casting distance B. This effect is obtained by making use of both surfaces of the spreader vanes and by giving the vanes an appropriate design as explained in further details in the following part.

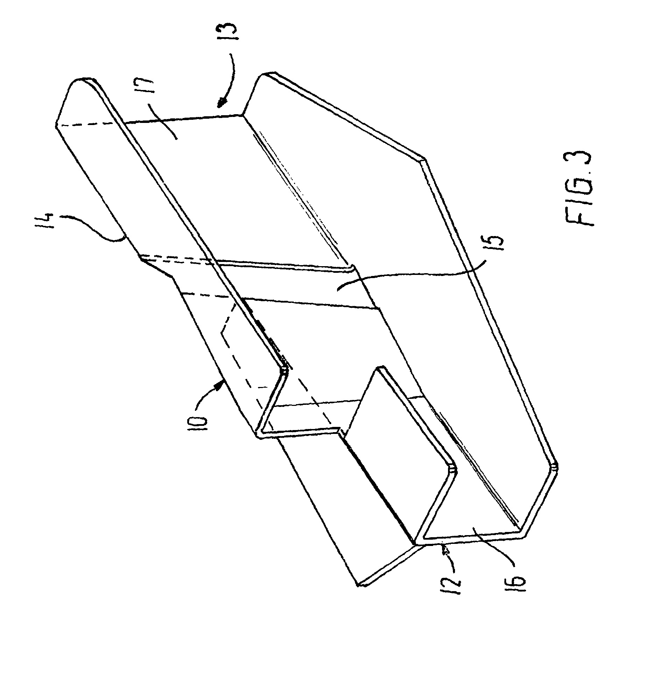

An example of a spreader vane 10 that will give a reduced casting distance for one direction of rotation is shown in Fig. 3. This spreader vane 10 comprises a blade 12 having a first side 13 that comes in contact with the material to be cast for the normal direction of rotation and a second side 14 that comes in contact with the material to be cast for a second opposite direction of rotation, corresponding to the direction of rotation during edge spreading. The blade defines an aperture 15 that divides the blade in a radially inner section 16 and a radially outer section 17. The radially inner section 16 provides on said first side a surface 13 serving as a spring-board for the material to be spread so that the material to be spread can travel over the aperture 15 onto the radially outer section 17 from which it will be cast. The radially inner section 16 provides on said second side 14 of the blade a surface allowing the material to be cast to pass through the aperture 15.

Since the material to be spread passes through said aperture 15 for the second opposite direction of rotation used with edge spreading, it will receive less kinetic energy than the material will receive when it is cast from said radially outer section 17 of the blade. In this way a reduced casting distance b is achieved for the opposite side of direction with a substantially equal speed of rotation of the disc.

The reduction in casting distance can also be achieved by reducing the speed of rotation of the spreader disc. In this way a conventional spreader vane can be used. It is also possible to use said above-mentioned reduced casting distance spreader vane 10 in combination with a reduced rotational speed of the spreader disc in order to achieve said reduced casting distance b.

According to the preferred embodiment of the invention the reduced casting distance b for the direction of rotation corresponding to the edge spreading will be substantially equal to half the normal casting distance B. Thus, the amount of material spread in the strip between the running track 2 not adjacent to the field boundary and the field boundary 3 will be substantially equal to the total amount of material spread with normal non-edge spreading. During normal field spreading each section of the field is spread on twice. Therefore, the strip next to the field boundary, on which is only spread once, will be spread with the right amount of material, if the normal amount of material is spread with half the normal casting distance. This demand is met by the above-described specific design of the rear surface of the spreader vane.

The method of edge spreading from a running track 2 not adjacent to the field boundary can be carried out with any type of spreader vane that will give a reduced casting distance for one direction of rotation. Various modifications to the spreader vanes as presented in this application will be easily conceived by the skilled person.

With the present invention it is possible to change between edge spreading from a track running in the field boundary and edge spreading from a track not adjacent to the field boundary without the operator of the spreader device having to make any modifications to the spreader device. If the spreader device is mounted to a tractor, it will be possible for the operator to select the desired method of edge spreading from the tractor without having to stop the tractor or leave the tractor and to make modifications to the spreader device. The operator has only to activate a simple device, which in turn will change the direction of the spreader discs and/or reduce the rotational speed of the spreader disc, and/or stop the flow of material to the outer disc.

According to the invention, the reversal of direction of rotation of the spreader discs (4, 5) could also be achieved by providing two pairs of spreader discs, one pair rotating towards one another and the other pair rotating away from one another on the non-shielded side of the spreader apparatus and the flowable material being supplied selectively to either pair of spreader discs

### LIST OF REFERENCE NUMBERS

- 1: Track adjacent to boundary
- 2: Track at a certain distance from the boundary
- 3: Field boundary
- 4: Spreader disc
- 5: Spreader disc
- 6: Thick line
- 7: Peak
- B: Casting distance
- b: Reduced casting distance
- 10: Spreader vane with reduced casting distance
- 12: Blade
- 13: First side of blade
- 14: Second side of blade
- 15: Aperture
- 16: Radially inner section
- 17: Radially outer section

## Claims

1. Method for spreading flowable material, preferably for spreading fertiliser, seeds or the like in granulate or powder form over an earth surface, by means of a spreading apparatus, comprising at least two spreader discs (4, 5), each provided with at least one spreader vane (10), the spreader discs (4, 5) being rotatable in two directions, comprising the steps of:
(i) moving said apparatus along a running track (1, 2),
(ii) when the distance between the boundary (3) and said running track is at least equal to the distance between adjacent running tracks, the direction of rotation of the spreader discs (4, 5) is such that they rotate in opposite directions (c, d) towards one another on the non-shielded side of the spreader device,
(iii) when the running track is adjacent the boundary (3) rotating the spreader discs (4, 5) in opposite direction away from one another on the non-shielded side of the spreader device and closing the supply of flowable material to the spreader disc (5) closest to the boundary (3),
**characterised in that** the method furthermore comprises the following steps the running track being at a distance from the boundary (3) said distance being less than the distance between adjacent running tracks:
(iv) rotating the spreader discs (4, 5) in opposite direction away from one another on the non-shielded side of the spreader device and reducing the casting distance (b) of the disc (5) closest to the boundary (3) substantially to said distance from the boundary (3), said reduction of the casting distance being obtained by using at least one spreader vane (10) that gives a shorter casting distance and reducing the rotational speed of the spreader disc (5) closest to the boundary (3) or by using only at least one spreader vane (10) that gives a shorter casting distance , and
(v) supplying flowable material to be spread to both of the spreader discs (4, 5) of said pair, whereby the spreader disc (5) with reduced casting distance is used for spreading material over the region between the boundary (3) and the running track.

2. Method according to claim 1, **characterised in that** the change of direction of rotation of the spreader discs (4, 5) from towards one another to away from one another is achieved by using a transmission that can reverse the direction of rotation.

3. Method according to claim 1 or 2, **characterised in that** said reversal of direction of rotation of the spreader discs (4,5) is achieved by providing two pairs of spreader discs (4, 5), one pair rotating towards one another and the other pair rotating away from one another on the non-shielded side of the spreading apparatus, the flowable material being supplied selectively to either pair of spreader discs.

4. Method according to any of the preceding claims, **characterised in that** said spreader vane (10) comprises a blade (12) having a first side (13) that comes in contact with the material to be cast for a first direction of rotation and a second side (14) that comes in contact with the material to be cast for a second direction of rotation, whereby the first side (13) of the blade provides an engagement surface for the material to be spread that extends further from the centre of rotation than the surface of engagement provided by the second side (14) of the blade (12).

5. Method according to claim 4, **characterised in that** said blade defines an aperture (15) dividing the blade in a radially inner section (16) and a radially outer section (17).

6. Method according to any of the preceding claims, **characterised in that** the casting distance (b) obtained with spreader vane (10), that gives a reduced casting distance (b) for the direction where the spreader discs (4, 5) rotate away from one another, is approximately half the casting distance (B) obtained when the discs (4, 5) are rotated towards one another.

7. Method according to any of the preceding claims, **characterised in that** said casting distance (B) obtained when the discs (4, 5) are rotated towards one another substantially corresponds to the distance between the running tracks.

8. Method according to any of the preceding claims, **characterised in that** the reduced casting distance (b) substantially corresponds to the distance between the running track (2) and the boundary (3) of the area to be spread.

## Patentansprüche

1. Verfahren zum Streuen von fließfähigem Material, vorzugsweise zum Streuen von Dünger, Saatgut oder ähnlichem in körniger oder Pulverform über eine Erdoberfläche mit Hilfe einer Streuvorrichtung, die mindestens zwei Streuerscheiben (4, 5) aufweist, von denen jede mit mindestens einer Streuerschaufel (10) versehen ist, wobei die Streuerscheiben (4, 5) in zwei Richtungen drehbar sind, wobei das Verfahren die folgenden Schritte aufweist:
(i) Bewegen der Vorrichtung entlang einer Fahrspur (1, 2),
(ii) wenn der Abstand zwischen der Grenze (3) und der Fahrspur mindestens gleich dem Abstand zwischen benachbarten Fahrspuren ist, ist die Drehrichtung der Streuerscheiben (4, 5) derart, daß sie auf der nichtabgeschirmten Seite der Streuvorrichtung in entgegengesetzten Richtungen (c, d) aufeinander zu rotieren,
(iii) wenn die Fahrspur benachbart zur Grenze (3) ist, rotieren die Streuerscheiben (4, 5) auf der nichtabgeschirmten Seite der Streuvorrichtung in entgegengesetzter Richtung voneinander weg und die Zufuhr des fließfähigen Materials an die der Grenze (3) nächsten Streuerscheibe (5) wird geschlossen,
**dadurch gekennzeichnet, daß** das Verfahren ferner die folgenden Schritte aufweist, wenn die Fahrspur in einem Abstand von der Grenze (3) ist, wobei dieser Abstand geringer als der Abstand zwischen benachbarten Fahrspuren ist:
(iv) Rotieren der Streuerscheiben (4, 5) auf der nichtabgeschirmten Seite der Streuvorrichtung in entgegengesetzter Richtung voneinander weg und Verringern der Wurfweite (b) der Scheibe (5), die am nächsten zur Grenze (3) ist, im wesentlichen auf den Abstand von der Grenze (3), wobei diese Verringerung der Wurfweite erreicht wird, indem mindestens eine Streuerschaufel (10) verwendet wird, die eine kürzere Wurfweite ergibt, und indem die Umdrehungsgeschwindigkeit der Streuerscheibe (5), die am nächsten an der Grenze (3) ist, verringert wird, oder indem nur mindestens eine Streuerschaufel (10) verwendet wird, die eine kürzere Wurfweite ergibt, und
(v) Zuführen von zu streuendem fließfähigem Material an beide Streuerscheiben (4, 5) dieses Paars, wobei die Streuerscheibe (5) mit verringerter Wurfweite zum Streuen von Material über den Bereich zwischen der Grenze (3) und der Fahrspur verwendet wird.

2. Verfahren nach Anspruch 1, **dadurch gekennzeichnet, daß** die Änderung der Drehrichtung der Streuerscheiben (4, 5) von aufeinander zu in voneinander weg erzielt wird, indem ein Getriebe verwendet wird, das die Drehrichtung umkehren kann.

3. Verfahren nach Anspruch 1 oder 2, **dadurch gekennzeichnet, daß** die Umkehrung der Drehrichtung der Streuerscheiben (4, 5) durch Bereitstellung von zwei Paaren von Streuerscheiben (4, 5) erreicht wird, wobei auf der nichtabgeschirmten Seite der Streuvorrichtung ein Paar aufeinander zu rotiert und das andere Paar voneinander weg rotiert, wobei das fließfähige Material selektiv einem der beiden Paare der Streuerscheiben zugeführt wird.

4. Verfahren nach einem der vorangehenden Ansprüche, **dadurch gekennzeichnet, daß** die Streuerschaufel (10) ein Blatt (12) aufweist mit einer ersten Seite (13), die für eine erste Drehrichtung in Berührung mit dem zu werfenden Material kommt, und einer zweiten Seite (14), die für eine zweite Drehrichtung mit dem zu werfenden Material in Berührung kommt, wobei die erste Seite (13) des Blatts eine Eingriffsoberfläche für das zu streuende Material liefert, die sich weiter von dem Drehmittelpunkt erstreckt als die von der zweiten Seite (14) des Blatts (12) gelieferte Eingriffsfläche.

5. Verfahren nach Anspruch 4, **dadurch gekennzeichnet, daß** das Blatt eine Öffnung (15) begrenzt, die das Blatt in einen radial inneren Abschnitt (16) und einen radial äußeren Abschnitt (17) teilt.

6. Verfahren nach einem der vorhergehenden Ansprüche, **dadurch gekennzeichnet, daß** die mit der Streuerschaufel (10) erzielte Wurfweite (b), die für die Richtung, in der die Streuerscheiben (4, 5) voneinander weg rotieren, eine verringerte Wurfweite (b) ergibt, etwa die Hälfte der Wurfweite (B) ist, die erzielt wird, wenn die Scheiben (4, 5) aufeinander zu rotieren.

7. Verfahren nach einem der vorhergehenden Ansprüche, **dadurch gekennzeichnet, daß** die Wurfweite (B), die erzielt wird, wenn die Scheiben (4, 5) aufeinander zu rotieren, im wesentlichen dem Abstand zwischen den Fahrspuren entspricht.

8. Verfahren nach einem der vorhergehenden Ansprüche, **dadurch gekennzeichnet, daß** die verringerte Wurfweite (b) im wesentlichen dem Abstand zwischen der Fahrspur (2) und der Grenze (3) der zu streuenden Fläche entspricht.

## Revendications

1. Procédé d'épandage de matériau fluide, de préférence pour épandre de l'engrais, des semences ou autres substances sous forme de granulés ou de poudre sur une surface de terre, au moyen d'un appareil d'épandage comprenant au moins deux disques épandeurs (4, 5), chacun pourvu d'au moins une aube d'épandeur (10), les disques épandeurs (4, 5) pouvant tourner dans deux directions, le procédé comprenant les étapes consistant à :
(i) déplacer ledit appareil le long d'un sillon de roulement (1, 2) ;
(ii) quand la distance entre la bordure de terrain (3) et ledit sillon de roulement est au moins égale à la distance entre des sillons de roulement adjacents, la direction de rotation des disques épandeurs (4, 5) est telle qu'ils tournent en contrarotation convergente (c, d) sur le côté sans écran du dispositif épandeur ;
(iii) quand le sillon de roulement est adjacent à la bordure de terrain (3), faire tourner les disques épandeurs (4, 5) en contrarotation divergente sur le côté sans écran du dispositif épandeur et fermer la délivrance de matériau fluide vers le disque épandeur (5) le plus proche de la bordure (3),
**caractérisé en ce que** le procédé comprend en outre les étapes suivantes, le sillon de roulement étant à une distance de la bordure (3), ladite distance étant inférieure à la distance entre des sillons de roulement adjacents :
(iv) faire tourner les disques épandeurs (4, 5) en contrarotation divergente sur le côté sans écran du dispositif épandeur et réduire la distance de projection (b) du disque (5) le plus proche de la bordure (3) sensiblement à ladite distance depuis la bordure (3), ladite réduction de la distance de projection étant obtenue en utilisant au moins une aube d'épandeur (10) qui produit une distance de projection plus courte et en réduisant la vitesse de rotation du disque épandeur (5) le plus proche de la bordure (3) ou en utilisant au moins une aube d'épandeur (10) qui produit une distance de projection plus courte, et
(v) délivrer un matériau fluide à épandre vers les deux disques épandeurs (4, 5) de ladite paire, de telle manière que le disque épandeur (5) ayant une distance de projection réduite est utilisé pour épandre le matériau sur la zone située entre la bordure (3) et le sillon de roulement.

2. Procédé selon la revendication 1, **caractérisé en ce que** le changement de direction de rotation des disques épandeurs (4, 5) de la contrarotation convergente à la contrarotation divergente est réalisé à l'aide d'une transmission qui peut inverser la direction de rotation.

3. Procédé selon la revendication 1 ou 2, **caractérisé en ce que** ladite inversion de direction de rotation des disques épandeurs (4, 5) est réalisée en prévoyant deux paires de disques épandeurs (4, 5), une paire de disques tournant en contrarotation convergente et l'autre paire de disques tournant en contrarotation divergente sur le côté sans écran de l'appareil d'épandage, le matériau fluide étant délivré sélectivement vers l'une ou l'autre paire de disques épandeurs.

4. Procédé selon l'une quelconque des revendications précédentes, **caractérisé en ce que** ladite aube d'épandeur (10) comprend une lame (12) ayant un premier côté (13) qui vient en contact avec le matériau à projeter pour une première direction de rotation et un deuxième côté (14) qui vient en contact avec le matériau à projeter pour une deuxième direction de rotation, de telle manière que le premier côté (13) de la lame forme une surface d'engagement de la matière à épandre qui s'étend plus loin à partir du centre de rotation que la surface d'engagement formée par le deuxième côté (14) de la lame (12).

5. Procédé selon la revendication 4, **caractérisé en ce que** ladite lame définit une ouverture (15) divisant la lame en une section radialement intérieure (16) et une section radialement extérieure (17).

6. Procédé selon l'une quelconque des revendications précédentes, **caractérisé en ce que** la distance de projection (b) obtenue avec l'aube d'épandeur (10), qui produit une distance de projection réduite (b) pour la direction où les disques épandeurs (4, 5) tournent en contrarotation divergente, est approximativement égale à la moitié de la distance de projection (B) obtenue quand les disques (4, 5) tournent en contrarotation convergente.

7. Procédé selon l'une quelconque des revendications précédentes, **caractérisé en ce que** ladite distance de projection (B) obtenues quand les disques (4, 5) tournent en contrarotation convergente correspond sensiblement à la distance entre les sillons de roulement.

8. Procédé selon l'une quelconque des revendications précédentes, **caractérisé en ce que** la distance de projection réduite (b) correspond sensiblement à la distance entre le sillon de roulement (2) et la bordure (3) de la zone à épandre.
